Europäisches Patentamt

European Patent Office

Office européen des brevets

(11) Publication number: **0 197 734**
**A2**

(12) **EUROPEAN PATENT APPLICATION**

(21) Application number: 86302347.9

(22) Date of filing: 27.03.86

(51) Int. Cl.⁴: **H 04 N 1/10**

(30) Priority: 29.03.85 GB 8508354

(43) Date of publication of application:
15.10.86 Bulletin 86/42

(84) Designated Contracting States:
AT BE CH DE FR GB IT LI LU NL SE

(71) Applicant: RANK CINTEL LIMITED
Watton Road
Ware Hertfordshire SG12 OAE(GB)

(72) Inventor: Lampard, Melvyn James
4, Clydesdale Road Royston
Hertfordshire, SG8 9JA(GB)

(74) Representative: Abnett, Richard Charles et al,
REDDIE & GROSE 16 Theobalds Road
London WC1X 8PL(GB)

(54) Microform reading apparatus.

(57) A microform reader for reading microfilm filmed at a reduction of about 200 times forms an image of a selected page on the microform on a linear solid state sensor which scans down the image of the page to produce a line-by-line or video-type representation of the page for transmission to a remote location. Selected lines of the sensor output are analysed to provide a determination of image parameters and enable the image-forming system to be adjusted to improve the transmitted image quality.

Thus each filmed page carries at its head a registration target of well defined shape such that a selected scanned line yields precise information as to the X-Y location of the page. Also selected pages include a focussing target including a pattern carrying a black/white discontinuities. Analysis of the scanned line representing the discontinuities gives a measure of the accuracy of focus enabling appropriate adjustment to be made automatically.

FIG.6

## MICROFORM READING APPARATUS

This invention relates to improvements in microform reading apparatus.

There is an increasing desire to obtain access to large quantities of archival written information which may not be available in computerised database form and indeed may not be very suitable for encoding in such form. Examples arise, for example, in banks where large numbers of signatures may be stored and may be required for verification of cheques, etc. and in subject-matter searching through technological data such as technical journals and patent documentation containing a mixture of text and drawings.

In either case immediate access to any particular document is required, and the information may be needed at any one of a number of locations.

At the present time such systems as exist to disseminate information of this type require large amounts of physical and/or electronic storage space.

Information of this type can however be micrographed and stored so that it can be displayed optically on a microform reader. Microfiche is well-known in which a (linear) reduction ratio of the order of 20 to 40 times is used. However, equipment is available which will reproduce from information stored at a reduction of about 200 times. With such equipment the registration and focussing tolerances are naturally very tight, as slight errors in registration or focussing can make the device useless. Accordingly such equipment is provided with manual adjustments by which the user can accurately locate the desired portion of the microform in the field of view, and can adjust the focus to the optimum value.

It would be highly desirable to use this type of storage system to feed an electronic information distribution system. In practice, however, there are problems. If the optical display of this equipment were to be replaced with a video signal generator, in principle along the lines of a facsimile machine, we have appreciated that adequate registration and focussing could not be relied on due to the enormous magnification ratio. When a remote user wanted to call up a specified page of information, it would be desirable to transmit it to him by a transmission which only takes place once. Video bandwidths such as would be required for continuous transmission are not available through conventional data channels such as use modems and telephone-type switching systems. If the registration or focussing is wrong, the user would have to guess a suitable correction, and ask the equipment to make an appropriate adjustment and then re-transmit the page. We have realised that this is not satisfactory.

It is known from US Patent 3,539,715 to provide a microform reproduction system generating video-type signals which positions the microform by use of a separate sensor which reads a special part of the microform to sense correct positioning. However, this system is insufficiently accurate for practical purposes where it is desired to fill the monitor screen with the page being viewed and is also expensive and difficult to construct in view of the need to provide and mount a separate sensor for registration purposes.

According to this invention there is provided apparatus for visibly reproducing minaturised pictorial information recorded on film, the apparatus including an image-forming system comprising a light source, means for registering an appropriate film portion in the path of light from the source, and optical imaging means for optically forming an image of the film portion in an image plane; and electronic signal forming means comprising electronic light sensor means in the image plane arranged to scan the image to produce an electrical output signal representative of a portion of the film, and means responsive to light passed through the film to adjust the image forming system; characterised in that the adjustment means is connected to the output of the scanning light sensor means, and by means for analysing the output of the light sensor means to provide determination of one or more image parameters and for adjusting the image-forming system in accordance therewith to improve the displayed picture.

The improvement can preferably be in relation to the registration or the focus of the picture. For registration, the film includes a special registration target, and for focussing the analysing means looks for black/white discontinuities or edges in the image.

The invention will now be described in more detail, by way of example, with reference to the drawings, in which:-

Figure 1  is a schematic side view of an image server apparatus embodying the invention;

Figure 2  shows one of the film strips used in the apparatus of Figure 1;

Figure 3  shows in more detail one segment of the film strip:

Figure 4  illustrates the electrical connections of the image server apparatus of Figure 1:

Figure 5  shows a microform page with a registration target:

Figure 6  is a side view of the relevant mechanical components of the image server apparatus;

Figure 7  is a side part of part of the apparatus of Figure 6 taken on the arrow VII in Figure 6;

Figure 8  schematically illustrates the use of the registration target in the apparatus;

Figure 9  shows the resultant electrical signal:

Figure 10  is a block schematic diagram of the control circuitry between the CCD sensor and the servo motors in the image server:

Figure 11  shows how a signal portion is used to determine focus in one method;

Figure 12  shows how a signal portion is used to determine focus in another method;

Figure 13  shows a preferred test page for use in focussing: and

Figure 14  is a view similar to Figure 5 of an alternative registration target.

The example illustrated uses the mechanical structure of a known microform reader, namely the model M-500 Automatic Reader sold by Microform Data Systems Inc. of 2904 Orchard Parkway, San Jose, California 95134, United States of America, designed for use with microform filmed at around 200 times reduction.  The structure of the relevant part of the reader is described in United States Patent No. 4,204,753, and other related material is to be found in United States Patent No. 4,202,613 and in earlier patents referred to therein.

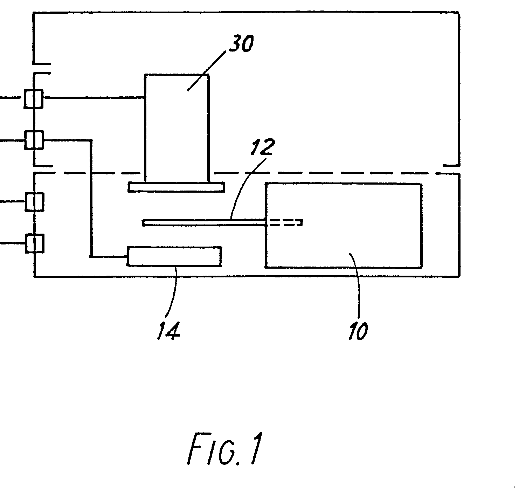

Briefly, and referring to Figure 1, the M-500 reader comprises a rotatable drum 10 mounted for rotation about its longitudinal and horizontal axis. The drum constitutes an annular-shaped cassette for a large number of sections of microform strip 12, which lie in successive radial planes. The drum 10 can be rotated to place any desired one of the strips at a specified location from which the strip can be at least partially withdrawn axially from the drum. When so withdrawn the strip moves into a position where it is illuminated by a light source 14.

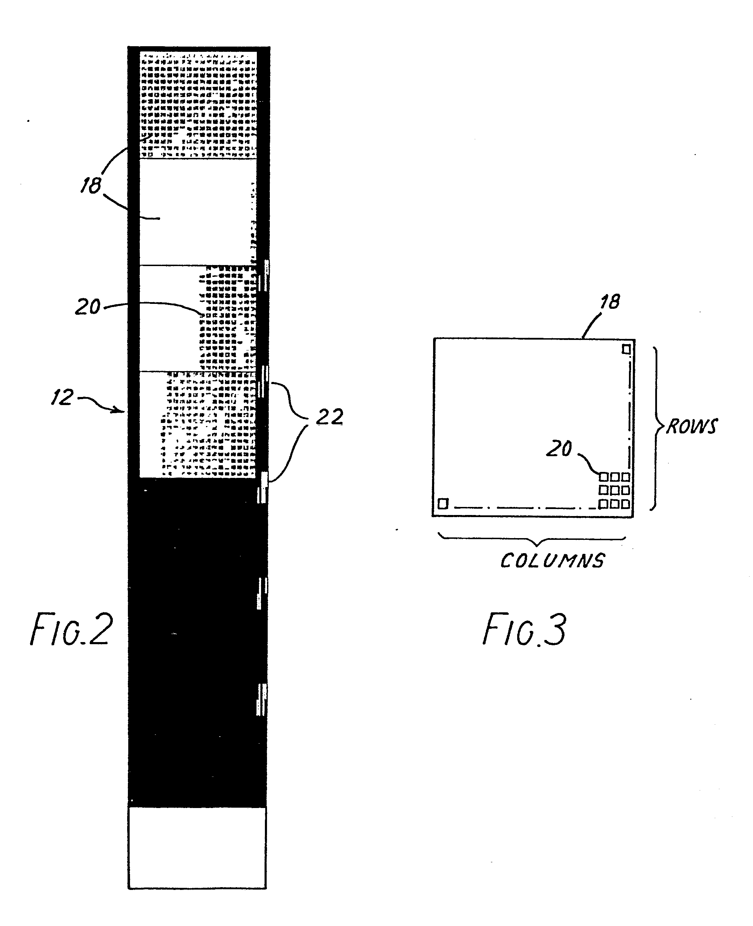

Figure 2 shows one such film strip 12. The strip is approximately 200mm by 35mm and carries up to five segments 18. Each segment carries up to about 400 pages 20 of A4 size filmed at a reduction of 200 times, the pages being arranged in columns and rows as shown in Figure 3. The side edge of the film strip carries indexing marks 22 which can be read by suitable optical means as described in the aforementioned patents.

In the M-500 reader, to view a specified page 20, the drum is rotated until the appropriate film strip is located at the location from which a film strip can be withdrawn. The strip is then withdrawn from the drum sufficiently to place the segment 18 containing the required page 20 above the light source 14. Above the strip is an optical imaging system which is movable along XY axes in a plane parallel to the film strip plane. The optical system is traversed to be above the desired page, which it then images onto an adjacent screen on which the optical image can be seen by the viewer.

Figure 1 illustrates in principle how this known reader can be modified to form an image server embodying this invention and producing a digital video- type output signal which can be transmitted to a remote location. In Figure 1 the optical imaging system is replaced by a solid state linear image sensor 30 of known type. Such a unit may comprise a 2048 element charge coupled device (CCD) such as the Fairchild CCD 1500R camera with a CCD 143 line array sensor. A suitable optical system is included to image the page onto the image sensor, though as the sensor is a linear sensor only one transverse line of the image falls on it at any moment. Accordingly the sensor is mounted not only to traverse to

the XY co-ordinates of any desired page, but also so that when it is at that page it scans or moves down the page to produce a signal representative of that page on a line-by-line basis.    In this way a video-type signal is generated.

This video signal can then be digitised and transmitted electronically to a local or remote workstation where it can be viewed on a video screen or printed out by a high-resolution graphics printer.    The video signal can be produced at a resolution comparable to that used for facsimile transmission in CCITT Group III mode, with a resolution of approximately 8 lines/mm both horizontally and vertically, related to the reproduced image (A4 size).

The reader unit shown in Figure 1 thus has the advantage that it permits random access to the film strips, rather that serial access as is the case with 35mm spooled film in cartridges.    Access to the strip can therefore be very rapid.

However, there are two particular problems with the unit. They both arise from the fact that when used as an optical microform reader the users can adjust the exact positioning of the film strip until they see that it is correctly positioned, and likewise can adjust the focus until it is at an optimum.    However, when the user is at a remote location, this mechanical control is not possible.    Furthermore, it may be desirable to reproduce the video image on a screen considerably smaller that the optical projection screen used in the known arrangement, so better registration is required to make the best possible use of the screen area if a loss of resolution is to be avoided.

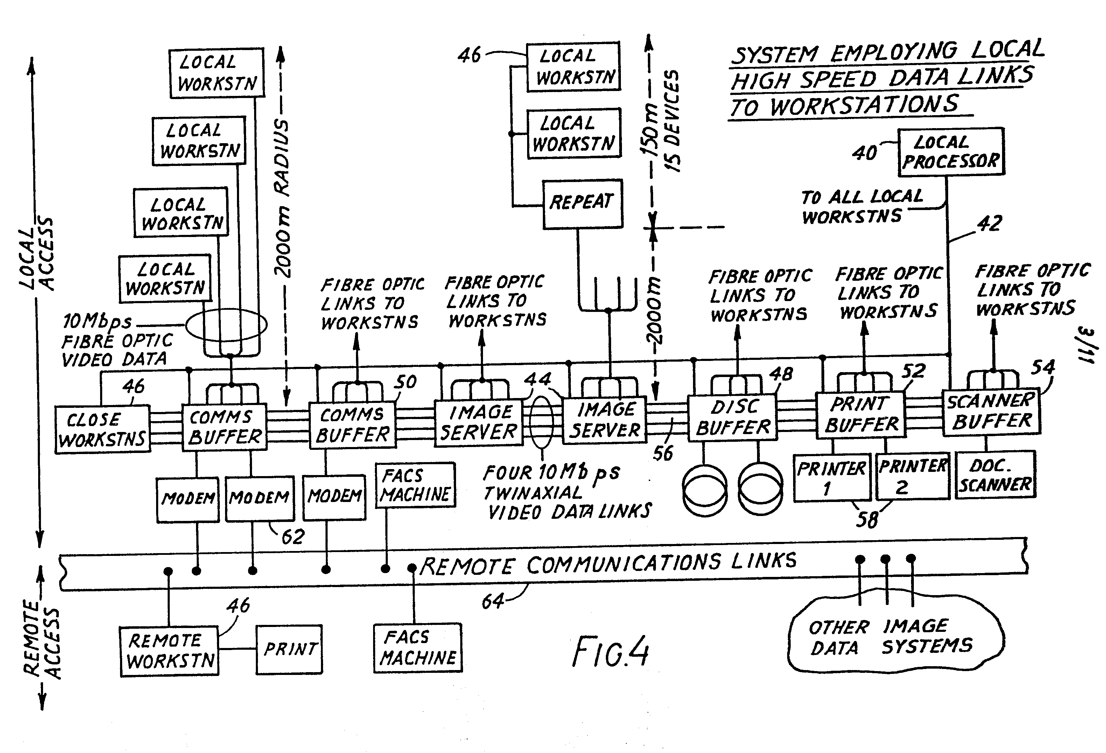

A possible implementation of the system is illustrated in Figure 4.    The system illustrated comprises a local processor 40 which interfaces directly via serial links 42, or via a local area network, with all of the system peripheral devices i.e. image servers 44, workstations 46, disc buffers 48, communication buffers 50, print buffers 52 and scanner buffers 54.    The local processor 40 controls the overall operation of each of these devices, and receives keyboard entries from the workstation operators.    The local processor contains the database which will allow indexed access to the image data base.

The image servers 44 are units of the type shown in Figure 1. Each can hold up to approximately one million A4 pages and access any randomly within a maximum of 5 seconds. The image is scanned by a self-contained CCD line array camera within approximately 1.4 seconds. The image is transmitted to the receiving devices (e.g. workstations) via high speed twin-axial or fibre-optic links 56. Each image server 44 as shown is fitted with four high-speed output channels, and is controlled via the low speed (9600 baud) serial link 42 from the local processor 40.

Each workstation 46 provides a means of displaying the images. They can also operate as simple high resolution VDU's and allow the operator to interface with the local processor 40. Each workstation is fitted with one high-speed video input port which can receive images from any of the data sources. The input can be selectively controlled by the local processor so that it receives only those images it requires.

The disc buffer unit 48 allows the storage of approximately 4000 pages on magnetic disc. This allows documents which are currently being filmed to be available to the user. Images for storage will normally be sourced by the document scanner. As the film strips become available the magnetic disc images are deleted.

The image servers are only capable of sourcing raw video data at a high data rate such as 10Mbps; for applications which require the image to be transmitted over slower links, a communications buffer 50 is required. This captures the high speed video data and allows a slower re-transmission.

The scanner buffer 54 provides an interface to an A4 document scanner. Captured images can be held in local memory and displayed. When suitable the image is re-transmitted to a disc buffer 48 for storage.

The print buffer 52 allows the capture of high speed image data and retransmission to graphics printers 58.

Thus in use an operator will be seated at a close, local or remote workstation 46. Those regarded as "close" are directly linked to the high capacity data channel which can comprise a 10Mbps cable or fibre optic link. Local workstations are coupled by a lower capacity channel, and remote workstations operate through modems 60 and other links 62 such as telephone channels 64.

The operation from a remote workstation will be considered. First the operator will communicate to the local processor 40 a desire to access a particular page, which will be defined by: which image server it is found on, and which page (column and row), on which segment, of which film strip 12. The local processor instructs the image server 44 to locate and transmit the relevant page. The video signal representing the page is produced by finding the appropriate film strip, moving it out to reveal the appropriate segment, traversing the sensor unit to above the relevant page, and then scanning it across the image of that page. The resultant video signal is then transmitted over the high capacity link 56 to the communications buffer 50, thence through modem 62 and link 64 to the remote workstation. The remote workstation includes a digital store with a capacity of at least one page which stores the received signal and then displays the page on the video screen.

It will be seen that with this configuration it is impracticable if not impossible to provide the operator with controls analogous to the registration and focussing controls on the known optical projection system. Any continuous adjustment mechanism would require continuous image transmission.

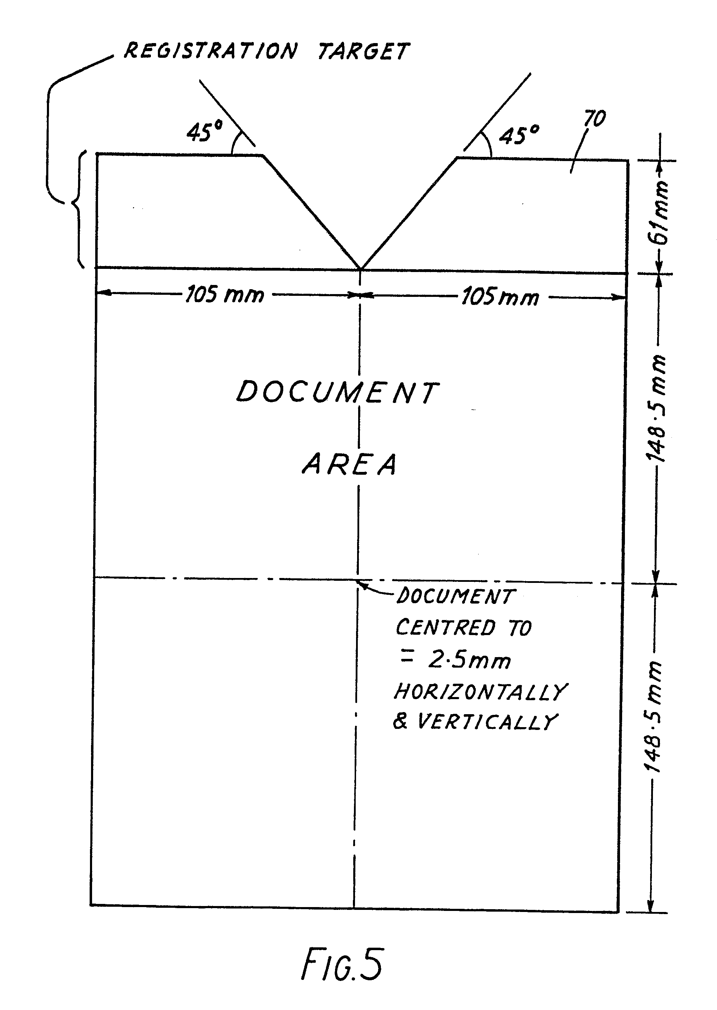

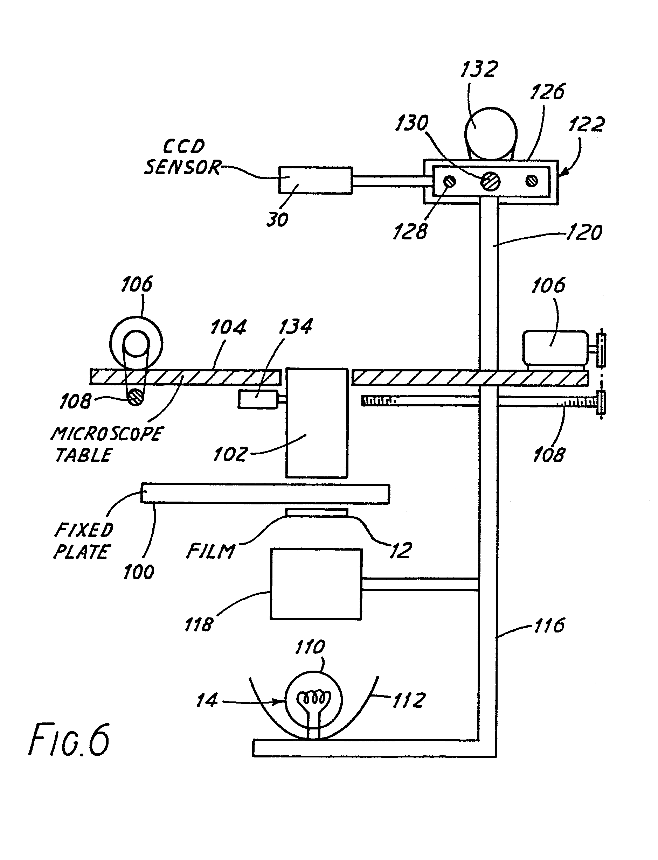

We overcome these problems by providing a totally automatic registration and focussing system. The registration system will be described first with reference to Figures 5 and 6.

Every page filmed on the microform is, in accordance with this invention, filmed with a registration target 70 accurately located at the top of the page. As shown, the registration target comprises a black band with a wedge or V shaped cut-out accurately centred on the centre line of the page. The height of the registration target is sufficiently large in relation to the worst-case mechanical tolerances of the system that when a page is mechanically positioned under the camera some part of the registration target will always be imaged on the sensor in the initial position of the sensor before scanning commences.

The additional structure needed to scan the microform is shown in Figure 6. The basic structure of US Patent 4,204,753 locates the film strip 12 beneath a glass plate 100 which is fixed in the equipment housing by any suitable means. The light source 14, imaging lens 102 and CCD scanner 30 are mounted for X-Y movement together on a 'microscope' table 104. The table 104 can be moved by servos 106 driving lead screws 108 in the two orthogonal directions to locate the lens 102 over the desired page in any given segment of the film strip 12. The light source 14 comprising bulb 110 and reflector 112 are mounted on an L-shaped arm 116 secured to the table 104. Arm 116 additionally supports a condenser lens 118 which also provides a heat shielding function between the light source 14 and the film 12.

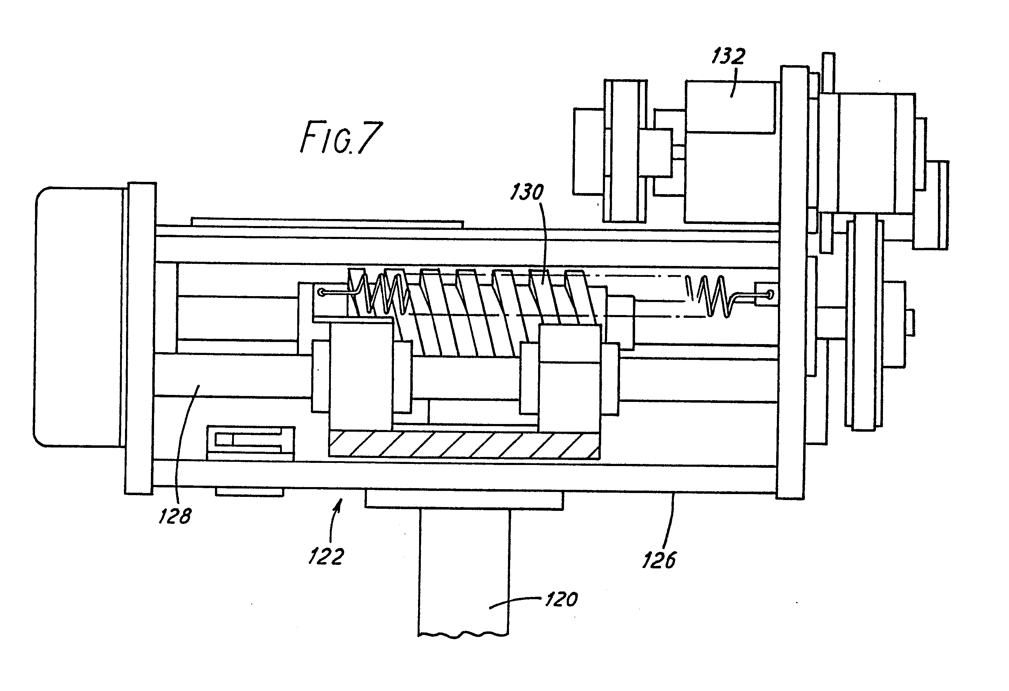

Above the table 104 an upstanding arm 120 supports the CCD mounting unit 122. The upper end of arm 120 carries a U-shaped block 124 on which runs a carriage unit 126, best seen in Figure 7. The carriage unit 126 has two guide rods 128 and a lead screw 130 driven by a servo 132. The CCD sensor 30 is fixed to the carriage unit and can thus be scanned down the page formed in the image plane by operation of the servo 132.

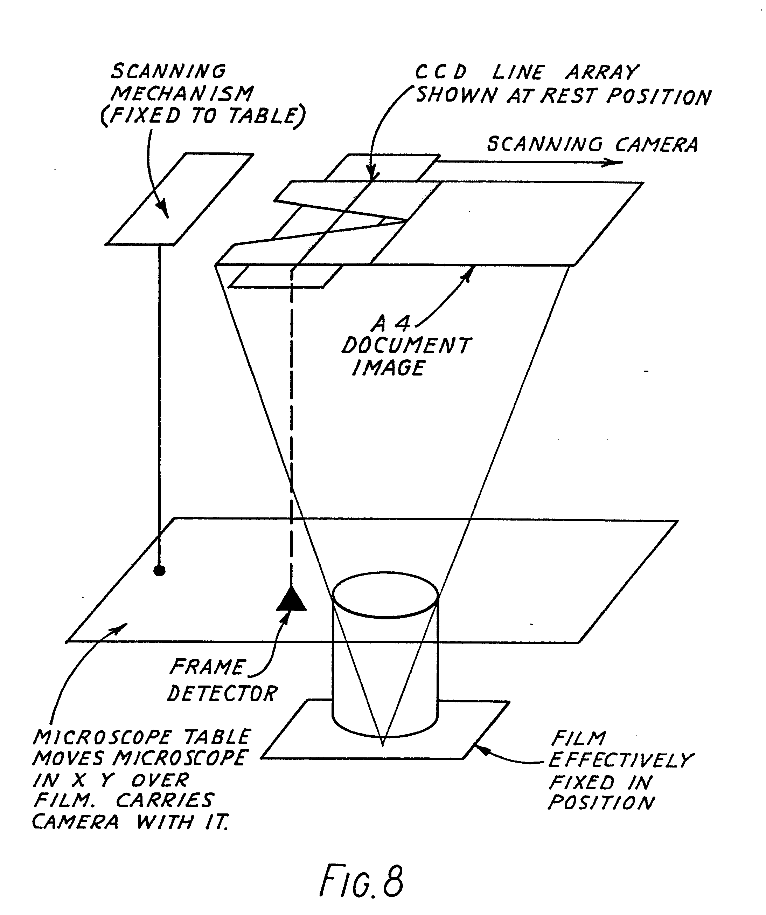

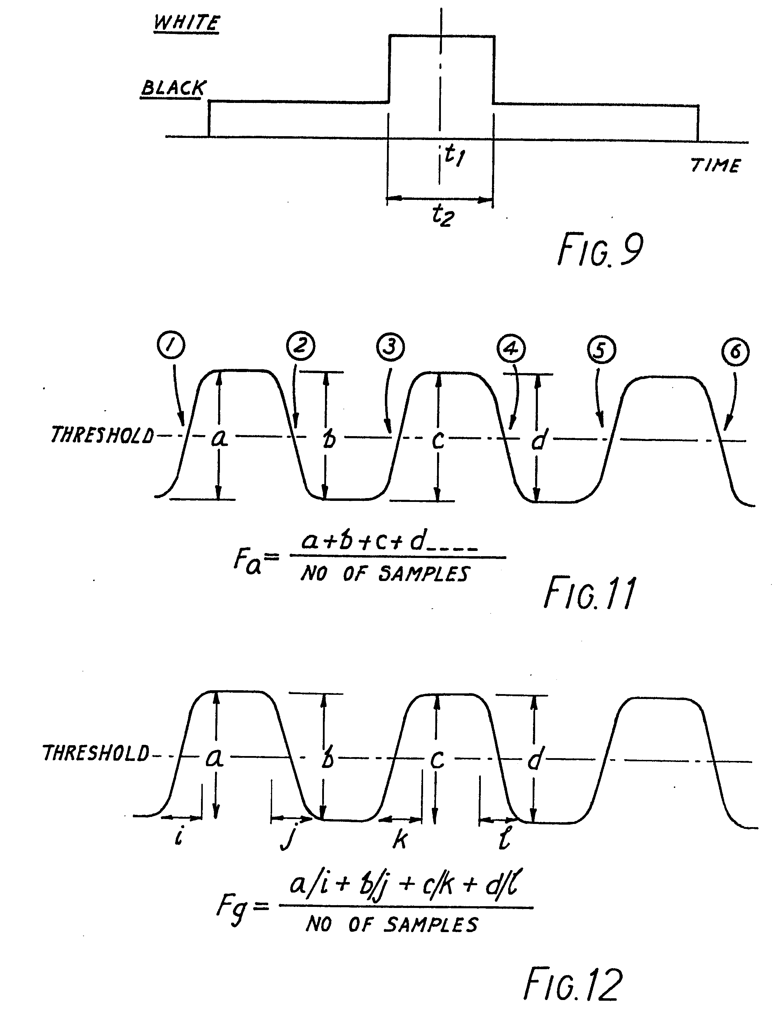

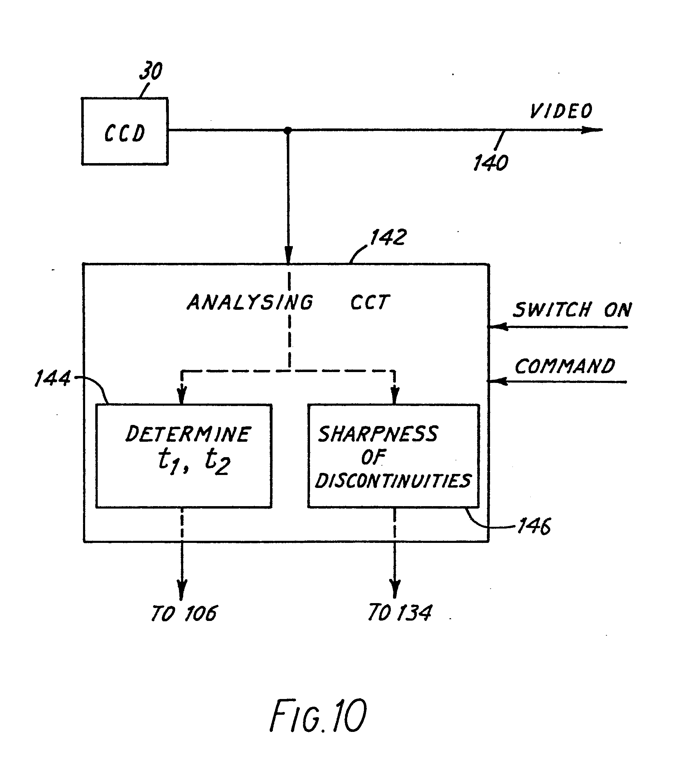

The scan is illustrated in Figure 8 and the resultant video output of the sensor is shown in Figure 9. The sensor output intersects the V-shaped cut-out in the registration target. Figure 6 and the resultant video output of the sensor is shown in Figure 7. The video output will have a central white-level portion with two black-level portions before and after it. The width $t_2$ of the white-level portion indicates the height of the scan up the V-shaped wedge on the registration target. The centre point $t_1$ of the white-level portion indicates the horizontal positioning of the target. As shown in Figure 10 the output from CCD sensor 30 is not only applied to a video output 140, but also to analysing circuitry 142. This analysing circuitry comprises timing circuitry 144 for determining the times $t_1$ and $t_2$ and thus giving an indication of the X-Y registration and controlling the servos 106 accordingly.

The location of the page as defined by its associated registration target relative to the scanning sensor is thus known and this information can now be used to provide more accurate registration. This is achieved by moving servos 106 to provide correcting movements to the camera so as accurately to locate it in relation to the image of the page. This image is seen in the diagrammatic representation of Figure 8. The scanner is then moved to its initial scanning position at the top of the imaged page and the scan commences. When a predetermined number of lines has been scanned, appropriate to cover the document area of the page, the scanning stops. Alternatively, the camera can be arranged always to overscan the page, the desired portion of the signal then being selected electronically on the basis of the information obtained from the registration target.

With this arrangement the image of the page can be accurately captured, so that at the workstations the full area of the screen can be used without the need to allow wide margins because of possible misregistration which would mean that the available screen resolution could not be used to full effect. The need for a registration target adjacent each page leads to a slight reduction in the number of pages accommodated on each segment. Consequently with a reduction ratio of about 215 the number of pages per segment may for example be 23 by 15.

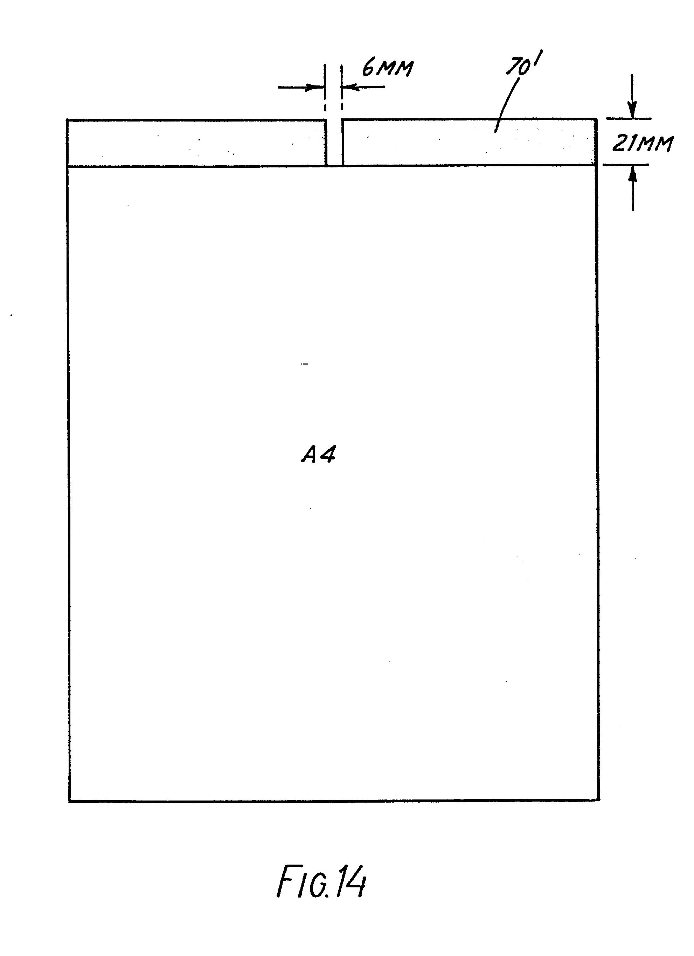

Figure 14 illustrates an alternative registration target which occupies less of the microform area. Here the target 70' contains a white strip at the central position in a black band. The X-registration is identified by reference to the white strip, and the Y-registration is achieved by detecting when the scan moves across the bottom edge of the black band.

Automatic focussing is also achieved by processing a scanned line. In this case a line which represents a number of black/white discontinuities is selected. The discontinuities are detected by looking for points where the signal level crosses a predetermined mid-grey threshold level. The resultant video line can be analysed in one of two ways. Both methods rely on the fact that as an image is defocused, it becomes gradually a more-uniform grey.

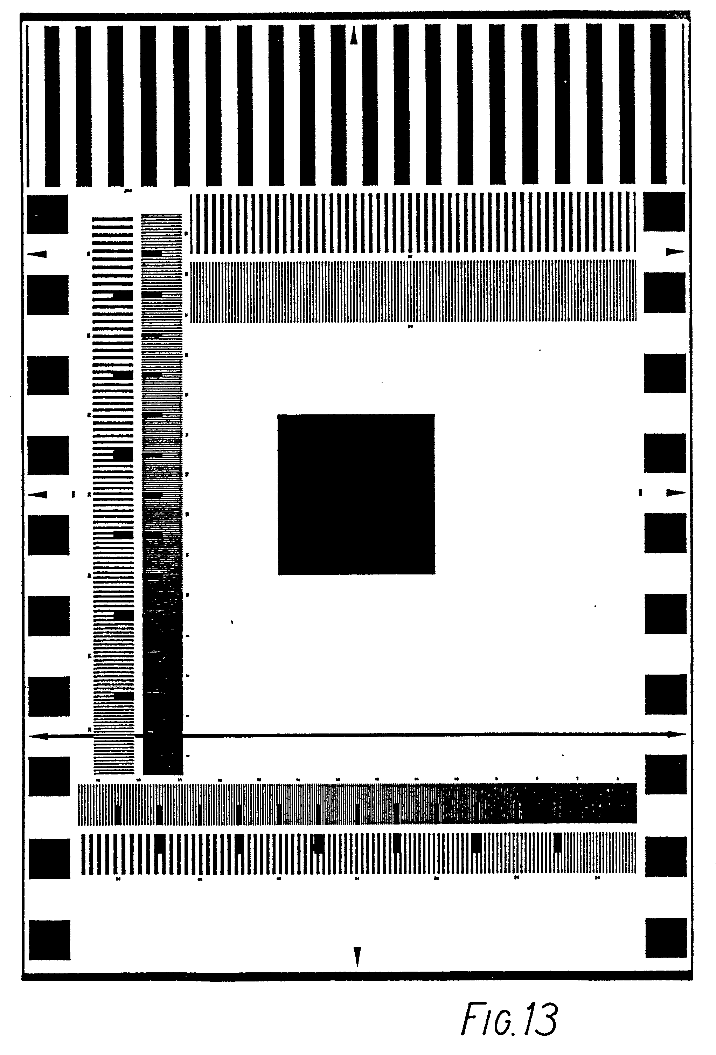

In the first method, the black-to-white amplitude at each discontinuity is determined. Referring to Figure 11, the average black-to-white amplitude is determined as:

- 10 -

$$\frac{a + b + c + d + \ldots}{\text{number of samples}} \qquad (1)$$

This average is then a relative measure of the degree of focus.

Alternatively, the gradient or slope of each transition is determined. Referring to Figure 12, the average gradient is found by calculating:

$$\frac{a/i + b/j + c/k + \ldots}{\text{number of samples}} \qquad (2)$$

With either of these methods, when the image is badly defocussed it is possible for new transition points to appear suddenly. When the averaged values are taken, as described, this can have the effect of reducing the average although the focus is, in fact, improving. This can lead to errors.

This problem can be overcome by adding to the expression (1) or (2) above an additional term which is a function of the number of discontinuities found.

The resultant comparative measure of degree of focus can then be used to adjust the image server so as to correct the focus. In one method the image server always scans the focus adjustment through its entire range, and then returns it to the detected point of maximum focus. Alternatively, the focus adjustment can be moved incrementally until a point is reached where it hunts about the position of maximum sharpness.

The discontinuity detection is achieved by appropriate circuitry 146 in the analysing circuitry 142, which drives a motor 134 (Figure 6) to adjust the focus of the lens system 102.

The target used for focus adjustment is preferably part of a special test page imaged on each film strip and preferably on each segment. This test page is illustrated in Figure 13. This includes a band across the page at a predetermined position, at the top as shown, containing white and black vertical stripes. However, it may be possible to operate the system on normal image content.

Alternatively, the registration target may be used for focussing in which case a single black/white discontinuity may be selected and its sharpness determined. Use of the registration target means that the camera unit does not have to traverse to a separate focussing target and makes the operating quicker and less
likely to introduce mechanical errors.

Thus it is seen that both the automatic registration and
automatic focussing operations use a line from the camera to improve
the quality of the image by appropriate electronic analysis to avoid
the need for manual intervention as is the case with known
microform readers.

As illustrated in Figure 10, the registration and focussing
operations are automatically executed whenever the image server is
switched on, or whenever respective special commands are given by
the user on their workstation keyboard. They can also be arranged
to happen after scanning every few pages or when there is a lull in
the scanning operation or in response to any other appropriate
criterion.

Another test which is run on switch-on is to illuminate a clear
page and note the output. It should be uniform along each line,
and as between lines. Due to unevennesses in the response of the
individual elements of the sensor array, and to the fact that the
sides of the pages tend to be less strongly illuminated than the
centre, the signals developed in the individual cells are not the
same. Accordingly during this dummy scan the average signal
developed by each element of the sensor is stored and used as
correction factors for the corresponding points on each line
subsequently generated in use of the device.

Likewise lines in the centre of the page tend to appear
brighter than those near the top and bottom. On the dummy scan the
average signal amplitude for each line is stored and used as a
correction factor for the corresponding lines of subsequent scans.

The sensor output is in use of the device compared with a
threshold to determine whether each individual point is regarded as
being black or white. This correction can be correctly set during
the focussing scan by electronically noting the black and white
signal levels and choosing a suitable value between them.

0197734

CLAIMS

1. Apparatus for visibly reproducing minaturised pictorial information recorded on film, the apparatus including an image-forming system comprising a light source, means for registering an appropriate film portion in the path of light from the source, and optical imaging means for optically forming an image of the film portion in an image plane: and electronic signal forming means comprising electronic light sensor means in the image plane arranged to scan the image to produce an electrical output signal representative of a portion of the film, and means responsive to light passed through the film to adjust the image forming system; characterised in that the adjustment means is connected to the output of the scanning light sensor means, and by means for analysing the output of the light sensor means to provide determination of one or more image parameters and for adjusting the image-forming system in accordance therewith to improve the displayed picture.

2. Apparatus according to claim 1, in which the analysing means determines the position of a scanned line of the image relative to a registration target on the film portion, and adjusts the registration means in response thereto.

3. Apparatus according to claim 1, in which the analysing means determins the focus of the image seen by the sensor and adjusts the optical imaging means in response thereto.

4. Apparatus according to any preceding claim, including means for causing operation of the analysing means on initial switch-on of the apparatus.

5. Apparatus according to any preceding claim, including means for causing periodic operation of the analysing means during operation of the apparatus.

FIG.1

Fig.2

Fig.3

SYSTEM EMPLOYING LOCAL HIGH SPEED DATA LINKS TO WORKSTATIONS

FIG.4

4/11

0197734

REGISTRATION TARGET

45°   45°   70

61 mm

105 mm   105 mm

DOCUMENT

AREA

148.5 mm

DOCUMENT CENTRED TO = 2.5mm HORIZONTALLY & VERTICALLY

148.5 mm

FIG.5

0197734

CCD
SENSOR

132
126
130
122
128
30
120
106
104
134
106
108
MICROSCOPE
TABLE
102
108
FIXED
PLATE
FILM
12
100
118
116
110
14
112

*FIG.6*

FIG.7

SCANNING
MECHANISM
(FIXED TO TABLE)

CCD LINE ARRAY
SHOWN AT REST POSITION

SCANNING CAMERA

A4
DOCUMENT
IMAGE

FRAME
DETECTOR

MICROSCOPE TABLE
MOVES MICROSCOPE
IN X Y OVER
FILM. CARRIES
CAMERA WITH IT.

FILM
EFFECTIVELY
FIXED IN
POSITION

FIG. 8

0197734

WHITE

BLACK

$t_1$

$t_2$

TIME

*FIG.9*

① ② ③ ④ ⑤ ⑥

THRESHOLD

$a$ $b$ $c$ $d$

$$F_a = \frac{a+b+c+d\ \_\_\_\_}{NO\ OF\ SAMPLES}$$

*FIG.11*

THRESHOLD

$a$ $b$ $c$ $d$

$i$ $j$ $k$ $l$

$$F_g = \frac{a/i + b/j + c/k + d/l}{NO\ OF\ SAMPLES}$$

*FIG.12*

0197734

FIG.10

FIG.13

6MM

70'

21MM

A4

FIG.14